(19) Europäisches Patentamt
European Patent Office
Office européen des brevets

(11) EP 3 521 330 A1

(12) EUROPEAN PATENT APPLICATION
published in accordance with Art. 153(4) EPC

(43) Date of publication:
07.08.2019 Bulletin 2019/32

(21) Application number: 17856447.2

(22) Date of filing: 29.09.2017

(51) Int Cl.:
*C08F 290/06* (2006.01) *C02F 5/00* (2006.01)
*C02F 5/10* (2006.01) *C08F 216/20* (2006.01)
*C08F 220/04* (2006.01) *C11D 3/37* (2006.01)
*C11D 7/22* (2006.01)

(86) International application number:
PCT/JP2017/035509

(87) International publication number:
WO 2018/062498 (05.04.2018 Gazette 2018/14)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 30.09.2016 JP 2016193800

(71) Applicant: Nippon Shokubai Co., Ltd.
Osaka-shi, Osaka 541-0043 (JP)

(72) Inventor: SANO, Yuki
Suita-shi
Osaka 564-0034 (JP)

(74) Representative: Cabinet Beau de Loménie
158, rue de l'Université
75340 Paris Cedex 07 (FR)

# (54) SULFURIC-ACID-(SALT)-ESTER-GROUP-CONTAINING COPOLYMER AND METHOD FOR PRODUCING SAME

(57) The invention aims to provide a polymer that can exhibit excellent calcium phosphate scale inhibition performance. The invention relates to a sulfuric acid (salt) ester group-containing copolymer containing a structural unit (a) derived from a sulfuric acid (salt) ester group-containing monomer (A) represented by the formula (1) and a structural unit (b) derived from an unsaturated carboxylic acid monomer (B).

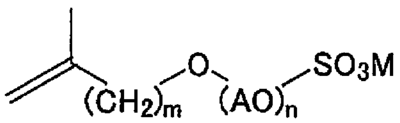

(1)



Printed by Jouve, 75001 PARIS (FR)

## Description

TECHNICAL FIELD

The invention relates to a sulfuric acid (salt) ester group-containing copolymer. Specifically, the invention relates to a sulfuric acid (salt) ester group-containing copolymer suitably used for water treatment agents and detergents.

BACKGROUND ART

In pipes of cooling water systems or heat exchangers, deposition of calcium carbonate, calcium phosphate, zinc hydroxide, magnesium silicate, or other substances in water causes various problems such as clogging or corrosion of the pipes and reduction of heat exchange efficiency. In particular, pipes made of iron require the use of a large amount of a corrosion inhibitor such as a phosphoric acid compound, which causes a calcium phosphate precipitate (scale).

Patent Literatures 1 and 2 disclose polymers including a structural unit derived from a polyalkylene glycol monomer as conventional scale inhibitors.

Patent Literature 3 discloses a composition containing a water-soluble or water-dispersible polymer having a predetermined structure.

CITATION LIST

- Patent Literature

Patent Literature 1: JP 2004-75977 A
Patent Literature 2: JP 2010-111792 A
Patent Literature 3: JP 2004-528439 T

SUMMARY OF INVENTION

- Technical Problem

Various polymers containing polyalkylene glycol proposed as described above have insufficient calcium phosphate scale inhibition performance and thus have room for improvement.

The invention has been made in view of the state of the art and aims to provide a polymer that can exhibit excellent calcium phosphate scale inhibition performance.

- Solution to Problem

The inventor has conducted various studies on polymers having excellent calcium phosphate scale inhibition performance and found that copolymers of a sulfuric acid (salt) ester group-containing monomer having a specific structure and an unsaturated carboxylic acid monomer are excellent in calcium phosphate scale inhibition performance. Thus, the problem is admirably solved, and the invention is completed.

That is, the invention relates to a sulfuric acid ester group and/or sulfuric acid ester salt group-containing copolymer including:

a structural unit (a) derived from a sulfuric acid ester group or sulfuric acid ester salt group-containing monomer (A); and

a structural unit (b) derived from an unsaturated carboxylic acid monomer (B),

the sulfuric acid ester group or sulfuric acid ester salt group-containing monomer (A) being represented by the formula (1):

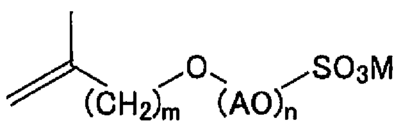

(1)

wherein AO is an oxyalkylene group, m is a number of 2 to 5, n is an average number of moles of oxyalkylene group

added and a number of 1 to 300, and M is a cation.

The invention is described in detail below.

Two or more of the preferred embodiments described below may be combined to serve as a preferred embodiment of the invention.

The copolymer of the invention includes a structural unit (a) derived from a sulfuric acid (salt) ester group-containing monomer (A) represented by the formula (1) and a structural unit (b) derived from an unsaturated carboxylic acid monomer (B). Such a copolymer has an excellent ability to dissolve calcium phosphate scale and an excellent ability to prevent (inhibit) the formation of calcium phosphate scale. The copolymer also has an excellent ability to capture calcium ions and is less likely to precipitate (has excellent gelling resistance) even in the presence of a hard component (e.g., calcium ion) .

In the formula (1), m is a number of 2 to 5. Thus, the number of carbon atoms of such a sulfuric acid (salt) ester group-containing monomer (A) falls within a suitable range. The copolymer of the invention has an improved solubility in a hydrophobic substance and is well miscible with a surfactant. Further, the copolymer of the invention highly disperses a hydrophobic substance and thus has excellent detergency.

Preferably, m is a number of 2 or 3, and m is more preferably 2. That is, the sulfuric acid (salt) ester group-containing copolymer in which m in the formula (1) is 2 is a preferred embodiment of the invention.

The oxyalkylene group represented by -(AO)- in the formula (1) is a C2-C18 oxyalkylene group. When two or more oxyalkylene groups are present, their addition may be in any form such as random addition, block addition, or alternating addition.

The oxyalkylene group represented by -(AO)- is preferably a C2-C8 oxyalkylene group, more preferably a C2-C4 oxyalkylene group.

The oxyalkylene group is an alkylene oxide adduct, and examples of the alkylene oxide include ethylene oxide, propylene oxide, butylene oxide, isobutylene oxide, 1-butene oxide, 2-butene oxide, and styrene oxide. More preferred are ethylene oxide, propylene oxide, and butylene oxide; still more preferred are ethylene oxide and propylene oxide; and particularly preferred is ethylene oxide.

When the oxyalkylene groups represented by -(AO)- in the formula (1) include an oxyethylene group obtained by addition of ethylene oxide, the amount of the oxyethylene group present in 100 mol% of all oxyalkylene groups is preferably 50 to 100 mol%, more preferably 60 to 100 mol%, still more preferably 70 to 100 mol%, further still more preferably 80 to 100 mol%, particularly preferably 90 to 100 mol%, most preferably 100 mol%.

In the formula (1), n is an average number of moles of oxyalkylene group added and a number of 1 to 300. The average number of moles of oxyalkylene group added preferably is a number of 1 to 300. The copolymer in which n falls within the preferred range indicated above can be suitable for use in aqueous systems, such as water treatment agents. More preferably, n is a number of 1 to 100, still more preferably is a number of 2 to 50. That is, the sulfuric acid (salt) ester group-containing copolymer in which n in the formula (1) is a number of 2 to 50 is a preferred embodiment of the invention. The average number of moles of oxyalkylene group added is particularly preferably 3 to 25, further preferably 5 to 15, most preferably 5 to 10.

In the formula (1), M is a cation.

When the sulfuric acid (salt) ester group-containing copolymer of the invention includes two or more structural units (a) derived from a sulfuric acid (salt) ester group-containing monomer (A), they may have the same or different M in the formula (1).

The cation may be a hydrogen ion or any of cations described below.

The cation other than a hydrogen ion may be any cation that can form a salt with a sulfuric acid group, and examples thereof include metal ions, an ammonium ion, and ions of acid salts of organic amines.

The metal ions mainly used may be monovalent to trivalent metal ions. Preferred is a monovalent or divalent metal ion. More preferred is a hydrogen ion or a monovalent metal ion.

Specific examples of the monovalent metal ion include alkali metal ions such as lithium, sodium, potassium, rubidium, and cesium ions, a copper ion and a silver ion. Preferred are lithium, sodium, and potassium ions.

Specific examples of the divalent metal ion include ions of the elements in group 2 of the periodic table, such as beryllium, magnesium, calcium, scandium, and barium ions, an iron ion, a zinc ion, a copper ion, a manganese ion, and a nickel ion. Preferred are beryllium, magnesium, and calcium ions.

Specific examples of the organic amines include alkylamines such as methylamine, ethylamine, dimethylamine, diethylamine, diisopropylamine, and di-n-butylamine; alkanolamines such as diethanolamine and diisopropanolamine; and cyclic amines such as morpholine and pyrrole.

The cation M is preferably a sodium ion or an ammonium ion, more preferably an ammonium ion.

The sulfuric acid (salt) ester group-containing copolymer of the invention includes a structural unit (b) derived from an unsaturated carboxylic acid monomer (B).

The unsaturated carboxylic acid monomer (B) is preferably an unsaturated monocarboxylic acid monomer or

an unsaturated dicarboxylic acid monomer, for example.

The unsaturated monocarboxylic acid monomer may be any monomer containing one unsaturated group and one group capable of forming a carbanion in a molecule. Examples thereof include (meth)acrylic acid, crotonic acid, tiglic acid, 3-methylcrotonic acid, 2-methyl-2-pentenoic acid, and itaconic acid; monovalent metal salts, divalent metal salts, ammonium salts, and organic amine salts of these acids; half esters of any of the unsaturated dicarboxylic acid monomers described below and a C1-C22 alcohol or a C2-C4 glycol; and half amides of any of the unsaturated dicarboxylic acid monomers and a C1-C22 amine.

The unsaturated dicarboxylic acid monomer may be any monomer containing one unsaturated group and two groups each capable of forming a carbanion in a molecule.
Examples thereof include maleic acid, itaconic acid, mesaconic acid, citraconic acid, and fumaric acid; monovalent metal salts, divalent metal salts, ammonium salts, and organic amine salts of these acids; and anhydrides thereof.

Preferred among the unsaturated carboxylic acid monomers are (meth)acrylic acid and maleic acid. More preferred is (meth)acrylic acid. Most preferred is acrylic acid.

Two or more of the unsaturated carboxylic acid monomers (B) may be used in combination. In this case, a combination of (meth)acrylic acid and maleic acid is preferred.

The sulfuric acid (salt) ester group-containing copolymer including a structural unit derived from (meth)acrylic acid and a structural unit derived from maleic acid is a preferred embodiment of the invention.

The sulfuric acid (salt) ester group-containing copolymer of the invention may include a structural unit (e) derived from a monomer (E) other than the sulfuric acid (salt) ester group-containing monomer (A) and the unsaturated carboxylic acid monomer (B).

Non-limiting examples of the monomer (E) include vinylsulfonic acid and salts thereof, styrenesulfonic acid and salts thereof, (meth)allylsulfonic acid and salts thereof, isoprenesulfonic acid and salts thereof, 3-(meth)allyloxy-2-hydroxypropanesulfonic acid and salts thereof, 3-(meth)allyloxy-1-hydroxypropanesulfonic acid and salts thereof, 2-(meth)allyloxyethylenesulfonic acid and salts thereof, and 2-acrylamido-2-methylpropanesulfonic acid and salts thereof; vinyl cyclic amine monomers having a cyclic amine structure, such as vinylpyridine, vinylimidazole, morpholine, and vinylpyrrole; aminoalkyl (meth)acrylates such as dimethylaminoethyl acrylate, dimethylaminoethyl methacrylate, dimethylaminopropyl acrylate, and aminoethyl methacrylate; allylamines such as diallylamine and diallyldimethylamine; amino group-containing monomers such as monomers obtained by reacting any of primary to tertiary amines (and salts thereof) with an epoxy ring of (meth)allyl glycidyl ether, isoprenyl glycidyl ether, or vinyl glycidyl ether and monomers obtained by quaternizing an amino group of each of these monomers (examples of the amines include alkylamines such as methylamine, ethylamine, dimethylamine, diethylamine, diisopropylamine, and di-n-butylamine; alkanolamines such as diethanolamine and diisopropanolamine; and cyclic amines such as morpholine and pyrrole; examples of a quaternizing agent used to quaternize the amino group include halogenated alkyls and dialkyl sulfuric acids; specific examples of the tertiary amine salt include trimethylamine hydrochloric acid salts and triethylamine hydrochloric acid salts; and examples of the salts include hydrochloric acid salts and organic acid salts);
cyclic N-vinyl lactam monomers such as N-vinylpyrrolidone, N-vinylcaprolactam, and N-vinyl-4-butylpyrrolidone; hydroxyalkyl (meth)acrylate monomers such as 2-hydroxyethyl (meth)acrylate, 2-hydroxypropyl (meth) acrylate, 2-hydroxybutyl (meth)acrylate, and hydroxymethyl (meth)acrylate; (meth)acrylic acid esters such as methyl (meth)acrylate, ethyl (meth)acrylate, butyl (meth)acrylate, 2-ethylhexyl (meth)acrylate, and dodecyl (meth)acrylate; vinyl carboxylates such as vinyl acetate, vinyl propionate, and vinyl butyrate; vinyl aryl monomers such as styrene and indene; alkenes such as isobutylene; N-vinyl cyclic amide monomers such as N-vinylformamide, N-vinylacetamide, N-vinyl-N-methylformamide, N-vinyl-N-methylacetamide, and N-vinyloxazolidone; acrylamides such as (meth)acrylamide and (meth)isopropyl acrylamide; polyalkylene glycol chain-containing monomers such as monomers in which 1 to 200 mol of alkylene oxide is added to a hydroxy group-containing monomer (e.g., (meth)allyl alcohol or isoprenol) and (meth)acrylic acid esters of alkoxy polyalkylene glycols; diesters of a C1-C22 alcohol and an unsaturated dicarboxylic acid such as maleic acid; diamides of an unsaturated dicarboxylic acid and a C1-C22 amine; and diesters of an unsaturated dicarboxylic acid and a C2-C4 glycol.

Non-limiting examples of the above-described salts include metal salts, ammonium salts, and organic amine salts (organic ammonium salts).

Preferred are sodium 3-allyloxy-2-hydroxy-propanesulfonate and an isoprenol ethylene oxide adduct, and most preferred is an isoprenol ethylene oxide adduct.

Two or more of these monomers (E) may be used in combination. In this case, a combination of sodium 3-allyloxy-2-hydroxy-propanesulfonate and an isoprenol ethylene oxide adduct is preferred.

The sulfuric acid (salt) ester group-containing copolymer including a structural unit derived from sodium 3-allyloxy-2-hydroxy-propanesulfonate and a structural unit derived from an isoprenol ethylene oxide adduct is a preferred embodiment of the invention.

The proportion of the structural unit (a) derived from a sulfuric acid (salt) ester group-containing monomer (A) is preferably 1 to 20 mol% in 100 mol% of all structural units of the sulfuric acid (salt) ester group-containing copolymer

of the invention.

The sulfuric acid (salt) ester group-containing copolymer containing the structural unit (a) in a proportion within the preferred range indicated above better prevents the formation of calcium phosphate scale.

The proportion of the structural unit (a) is more preferably 2 to 18 mol%, still more preferably 5 to 15 mol%, particularly preferably 7 to 12 mol%, most preferably 8 to 11 mol%.

The proportion of the structural unit (b) derived from an unsaturated carboxylic acid monomer (B) is preferably 80 to 99 mol% in 100 mol% of all structural units of the sulfuric acid (salt) ester group-containing copolymer of the invention. Such a copolymer has a suitable acid content and thus better disperses clay or kaolin, for example. The proportion of the structural unit (b) is more preferably 82 to 98 mol%, still more preferably 85 to 95 mol%, particularly preferably 88 to 93 mol%, most preferably 89 to 92 mol%.

When the unsaturated carboxylic acid monomer (B) is a combination of (meth)acrylic acid (B-1) and a different unsaturated carboxylic acid monomer (B-2) other than the monomer (B-1), the proportion of the structural unit (b-1) derived from the (meth)acrylic acid (B-1) in 100 mol% of all structural units is preferably 40 to 97 mol%, more preferably 45 to 95 mol%. In this case, the proportion of the structural unit (b-2) derived from the unsaturated carboxylic acid monomer (B-2) other than the (meth)acrylic acid in 100 mol% of all structural units is preferably 1 to 59 mol%, more preferably 3 to 54 mol%.

The proportion of the structural unit (e) derived from a monomer (E) is preferably 0 to 20 mol%, more preferably 0 to 10 mol%, still more preferably 0 to 5 mol%, particularly preferably 0 to 2 mol% in 100 mol% of all structural units of the sulfuric acid (salt) ester group-containing copolymer of the invention. When the monomer (E) is a combination of an isoprenol ethylene oxide adduct and a different monomer (E) other than this, the proportion of the structural unit derived from an isoprenol ethylene oxide adduct in 100 mol% of all structural units is preferably 0.5 to 18 mol%, more preferably 2 to 10 mol%. In this case, the proportion of the structural unit derived from the different monomer (E) other than the isoprenol ethylene oxide adduct in 100 mol% of all structural units is preferably 1 to 18 mol%, more preferably 1 to 10 mol%.

The sulfuric acid (salt) ester group-containing copolymer of the invention may not include the structural unit (e) derived from a monomer (E). In this case, the ratio of the structural unit (a) to the structural unit (b) ((a)/(b) (mol%)) is preferably (1 to 20)/(80 to 99), more preferably (2 to 18)/(82 to 98), still more preferably (7 to 12)/(88 to 93), particularly preferably (8 to 11)/(89 to 92) .

In the case of the sulfuric acid (salt) ester group-containing copolymer including the structural unit (e), the ratio of the structural unit (a) to the structural unit (b) to the structural unit (e) ((a)/(b)/(e) (mol%)) is preferably (0.5 to 18)/(80 to 99)/(0.5 to 18), more preferably (1 to 10)/(80 to 98)/(1 to 10), particularly preferably (1 to 5)/(90 to 98)/(1 to 5), most preferably (1 to 4)/(92 to 98)/(1 to 4).

The sulfuric acid (salt) ester group-containing copolymer of the invention has a weight average molecular weight of preferably 500 to 1000000, more preferably 1000 to 500000, still more preferably 2000 to 200000, further still more preferably 2000 to 100000, particularly preferably 3000 to 50000, most preferably 5000 to 30000. The weight average molecular weight of the copolymer may be measured according to the method disclosed in the examples.

The sulfuric acid (salt) ester group-containing copolymer of the invention preferably contains a sulfonic acid (salt) group or a hypophosphorous acid (salt) group, more preferably a.hypophosphorous acid (salt) group, at at least one end of the main chain. The copolymer containing a hypophosphorous acid (salt) group at an end of the main chain has better calcium phosphate scale prevention (inhibition) performance.

The polymer containing a sulfonic acid (salt) group at an end of the main chain can be produced by polymerization of a monomer component containing the sulfuric acid (salt) ester group-containing monomer (A) and the unsaturated carboxylic acid monomer (B) in the presence of a chain transfer agent such as sulfite, bisulfite, dithionous acid, metabisulfite, or a salt thereof described below.

The polymer containing a hypophosphorous acid (salt) group at an end of the main chain can be produced by polymerization of a monomer component containing the sulfuric acid (salt) ester group-containing monomer (A) and the unsaturated carboxylic acid monomer (B) in the presence of a chain transfer agent such as hypophosphorous acid (salt) described below.

<Method for producing sulfuric acid (salt) ester group-containing monomer (A)>

The sulfuric acid (salt) ester group-containing monomer (A) may be produced by any method. Preferably, it is produced by sulfuric acid esterification of an unsaturated alcohol alkylene oxide adduct with a sulfating agent. Non-limiting examples of the sulfating agent include chlorosulfuric acid, fuming sulfuric acid, sulfuric acid, sulfur trioxide, and sulfamic acid. This production method can give the sulfuric acid (salt) ester group-containing monomer (A) by a single step reaction, which leads to significant reduction of production costs of the sulfuric acid (salt) ester group-containing monomer (A). Thus, the sulfuric acid (salt) ester group-containing copolymer of the invention can be produced at low cost. The sulfuric acid (salt) ester group-containing monomer (A) in the invention can also be produced by reference to JP S62-11534 A. Further, the sulfuric acid (salt) ester group-containing monomer (A) in the invention can also be produced

by any of the following production methods (a) to (f) :

(a) sulfation in the presence of a low molecular weight tertiary amine, particularly trimethylamine (JP S38-14718 B);
(b) sulfuric acid esterification in the presence of a compound represented by the formula $R^1CONR^2R^3$ (where $R^1$, $R^2$, and $R^3$ each represent hydrogen, a methyl group, or an ethyl group) and optionally in an inert solvent (JP S39-464 B);
(c) use of a composition containing sulfamic acid (x) and acid ammonium sulfate (y) as a sulfating agent in a ratio x/y by weight of 98/2 to 75/25 (JP S43-15168 B);
(d) use of a catalyst which is a combination of urea and a inorganic acid, organic acid, or aromatic sulfonic acid that donates a hydrogen ion (JP S54-122224 A);
(e) reaction of sulfamic acid pressed through at least a 60-mesh (aperture size: 250 μm) sieve (JP S56-133256 A); and
(f) reaction of sulfamic acid pressed through at least a 200-mesh (aperture size: 75 μm) sieve (JP S57-192354 A).

The unsaturated alcohol used to produce the sulfuric acid (salt) ester group-containing monomer (A) is preferably a compound represented by the following formula (2) :

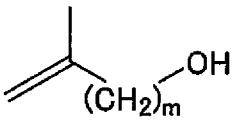 (2)

wherein m is a number of 2 to 5.

Here, m in the formula (2) is the same as m for the sulfuric acid (salt) ester group-containing monomer (A). The unsaturated alcohol is preferably isoprenol.

The reaction product containing the sulfuric acid (salt) ester group-containing monomer (A) obtained by the above-described production method may be directly used to produce the sulfuric acid (salt) ester group-containing copolymer or after treatment such as solvent removal or purification. Further, the sulfuric acid (salt) ester group-containing monomer (A) obtained by the production method may be subjected to acid treatment or ion exchange to the extent that the ester does not decomposes. Thus, M in the formula (1) can be replaced with a hydrogen ion, a metal ion, an ammonium ion, an organic ammonium ion, or an ion of an acid salt of an organic amine.

<Method for producing sulfuric acid (salt) ester group-containing copolymer>

The sulfuric acid (salt) ester group-containing copolymer of the invention may be produced by any method. It can be produced by polymerization of a monomer component. Specific examples, preferred examples, and preferred proportions of the respective monomers are the same as those described for the corresponding structural units of the copolymer.

The invention also relates to a method for producing a sulfuric acid (salt) ester group-containing copolymer, and the production method includes polymerization of a monomer component containing a sulfuric acid (salt) ester group-containing monomer (A) and an unsaturated carboxylic acid monomer (B).

Production of the sulfuric acid (salt) ester group-containing copolymer of the invention by this production method can lead to significantly reduced production costs.

The sulfuric acid (salt) ester group-containing copolymer of the invention may be produced by any polymerization method such as solution polymerization, bulk polymerization, suspension polymerization, emulsion polymerization, living polymerization, or graft polymerization. Solution polymerization is preferred. Examples of solvents include water; monohydric alcohols such as methanol, ethanol, and isopropanol; polyhydric alcohols such as glycol, glycerol, and polyethylene glycol; amides such as dimethyl formaldehyde; and ethers such as diethyl ether and dioxane. Each of these solvents may be used alone or two or more of these may be used in combination. Preferred among the solvents are aqueous solvents such as water, monohydric alcohols, and polyhydric alcohols, and more preferred is water. The use of only water can advantageously eliminate the need for removal of solvents in some cases.

The amount of the solvent to be used is preferably 40 to 300 parts by mass, more preferably 45 to 200 parts by mass, still more preferably 50 to 150 parts by mass relative to 100 parts by mass of all monomers. The solvent in an amount of 40 parts by mass or more relative to 100 parts by mass of all monomers can sufficiently prevent the production of a polymer having too high a molecular weight. The solvent in an amount of 300 parts by mass or less relative to 100 parts by mass of all monomers can sufficiently prevent the production of the polymer at too low a concentration and can eliminate the need for removal of solvents in some cases.

The copolymer is preferably produced by polymerization of the monomer component in the presence of a polymerization initiator. In the polymerization of the monomer component, a polymerization initiator may be used as

appropriate depending on the polymerization method. The polymerization initiator may be a commonly used one. Examples thereof include hydrogen peroxide; persulfates such as sodium persulfate, potassium persulfate, and ammonium persulfate; azo compounds such as 2,2'-azobis(2-amidinopropane)hydrochloric acid salts, 4,4'-azobis-4-cyanovaleric acid, azobisisobutyronitrile, and 2,2'-azobis(4-methoxy-2,4-dimethylvaleronitrile); and organic peroxides such as benzoyl peroxide, lauroyl peroxide, peracetic acid, di-t-butylperoxide, and cumene hydroperoxide. Preferred among these polymerization initiators are hydrogen peroxide, persulfates, and 2,2'-azobis(2-amidinopropane)hydrochlorides, and more preferred are persulfates and 2,2'-azobis(2-amidinopropane)hydrochlorides.

Each of these polymerization initiators may be used alone, or two or more of these may be used in combination.

The amount of the polymerization initiator to be used may be any amount as long as it can initiate polymerization of the monomer component. The amount is usually 1 to 20 g, preferably 2 to 10 g, more preferably 2 to 8 g relative to 1 mol of the whole monomer component.

The production method may use a chain transfer agent to regulate the molecular weight of the polymer, if needed. Specific examples of the chain transfer agent include thiol chain transfer agents such as mercaptoethanol, thioglycerol, thioglycolic acid, 2-mercaptopropionic acid, and 3-mercaptopropionic acid; halides such as carbon tetrachloride, methylene chloride, bromoform, and bromotrichloroethane; secondary alcohols such as isopropanol and glycerol; and lower oxides and salts thereof such as phosphorous acid, hypophosphorous acid, and salts thereof (e.g., sodium hypophosphite, potassium hypophosphite), sulfite, bisulfite, dithionous acid, metabisulfite, and salts thereof (e.g., sodium bisulfite, potassium bisulfite, sodium dithionite, potassium dithionite, sodium metabisulfite, potassium metabisulfite). Preferred are hypophosphorous acid and salts thereof. Each of these chain transfer agents may be used alone, or two or more of these may be used in combination.

The presence of hypophosphorous acid or a salt thereof as a chain transfer agent can increase the reaction temperature to the boiling point and thus enables easily control of the reaction temperature, leading to easy production of the copolymer. In addition, the presence of hypophosphorous acid or a salt thereof can sufficiently prevent deterioration of equipment such as pipes due to rust, for example.

The amount of the chain transfer agent to be used may be any amount and is usually 0.1 to 20 g, preferably 0.5 to 10 g, more preferably 1 to 5 g relative to 1 mol of the whole monomer component.

The reaction of the solution polymerization may be performed in any way. It can be performed in a usual way. For example, the reaction may be performed by adding dropwise the monomer and a polymerization initiator (hereinafter, also referred to as "initiator") to a solvent previously introduced in the reaction system. In such a reaction, each solution to be added dropwise may have any appropriate concentration.

When the reaction is performed by adding dropwise the monomer and an initiator to a solvent previously introduced in the reaction system, the monomer component, the initiator component, and other optional additives dissolved in different solvents may be appropriately added (dropwise) to the reaction system or may be added (dropwise) to the reaction system without dissolving into solvents. In the reaction, part or the whole of the monomer component to be used may be previously introduced (initial introduction) to the reaction system before the start of polymerization. Preferably, part or the whole of the sulfuric acid (salt) ester group-containing monomer (A) to be used may be added dropwise to perform reaction. This operation can sufficiently prevent generation of polyacrylic acid even when the proportion of the unsaturated carboxylic acid monomer (B) in the monomer component is high, whereas the operation can sufficiently reduce the amount of the residual, unreacted sulfuric acid (salt) ester group-containing monomer (A) even when the proportion of the unsaturated carboxylic acid monomer (B) is low. That is, regardless of the proportions of the monomers, a polymer having a more uniform composition can be produced by reaction by adding dropwise the monomer component and the initiator component to a solvent previously introduced in the reaction system.

More preferably, the whole of the monomer component to be used is added dropwise to perform reaction.

The polymerization temperature may be any temperature, and is usually 50°C to 120°C, preferably 60°C to 110°C. When the polymerization temperature falls within the ranges indicated above, the amount of the residual monomer component tends to be reduced. The polymerization temperature does not need to be maintained constant at all times during the polymerization reaction. For example, first, the polymerization may start at room temperature, next, the polymerization temperature may be increased to a predetermined temperature over an appropriate period of time at an appropriate heating rate, and then, the predetermined temperature may be maintained; or the polymerization temperature may be varied (increased or decreased) over time during the polymerization reaction depending on the way of dropwise addition of the monomer component or the initiator. The monomer component is preferably polymerized under appropriate stirring so as to uniformly polymerize the monomer component.

The polymerization time, which may be appropriately determined depending on the progress of the polymerization reaction, is usually about 2 to 9 hours, but is not limited thereto. Here, the term "polymerization time" herein means the sum of the addition time and the aging time of the monomers.

The pressure in the reaction system may be normal pressure (atmospheric pressure), reduced pressure, or increased pressure. The atmosphere in the reaction system may be either air atmosphere or inert atmosphere.

The solids concentration of the aqueous solution at the end of the polymerization reaction in the polymerization

reaction system (i.e., solids concentration of the polymerized monomer) is preferably 20 mass% or higher, more preferably 25 to 80 mass%. In cases where the solids concentration is as high as 20 mass% or higher at the end of the polymerization reaction, the polymerization can be performed in a single step at a high concentration. This can eliminate the need for concentration required in some cases in conventional production methods, so that the copolymer can be produced efficiently, for example. Thus, the production efficiency can be significantly increased, resulting in a significant increase in the productivity of the copolymer of the invention and prevention of an increase in the production costs.

In order to increase the polymerization rate of the monomers, the method for producing the copolymer of the invention may include aging after the completion of addition of all materials to be used. The aging time is usually 0 to 120 minutes, preferably 1 to 60 minutes, more preferably 1 to 30 minutes. If the aging time is less than one minute, the unreacted monomer component may remain due to insufficient aging. Such a residual monomer may cause toxicity or odor.

A preferred temperature of the polymer solution during aging falls within the same range as the above-described polymerization temperature. Thus, the temperature during aging may be maintained at a constant temperature (preferably the temperature at the end of the dropwise addition) or may be varied over time.

In the copolymer, part or all of Ms of the structural unit (a) represented by the formula (1) may be replaced with an ion (e.g., a hydrogen ion, a metal ion such as a sodium ion, or an organic ammonium ion) during polymerization. Further, the copolymer obtained by the production method may be subjected to acid treatment or ion exchange to the extent that the ester does not decomposes. Thus, part or all of Ms of the structural unit (a) represented by the formula (1) can be replaced with a hydrogen ion, a metal ion, an ammonium ion, an organic ammonium ion, or an ion of an acid salt of an organic amine.

<Sulfuric acid (salt) ester group-containing copolymer composition>

The invention also relates to a sulfuric acid (salt) ester group-containing copolymer composition containing the sulfuric acid (salt) ester group-containing copolymer and a sulfuric acid (salt) ester group-containing monomer (A) and/or the unsaturated carboxylic acid monomer (B) of the invention, the amount of the sulfuric acid (salt) ester group-containing monomer (A) being 1.5 mass% or less relative to 100 mass% of the sulfuric acid (salt) ester group-containing copolymer, the amount of the unsaturated carboxylic acid monomer (B) being 2 mass% or less relative to 100 mass% of the sulfuric acid (salt) ester group-containing copolymer.

When the sulfuric acid (salt) ester group-containing copolymer is produced by polymerization of the sulfuric acid (salt) ester group-containing monomer (A) and the unsaturated carboxylic acid monomer (B), the sulfuric acid (salt) ester group-containing monomer (A) and the unsaturated carboxylic acid monomer (B) may remain as unreacted monomers. In contrast, the above-described preferred production method can sufficiently reduce the amounts of such unreacted monomers in the production of the copolymer.

In a preferred embodiment of the invention, the sulfuric acid (salt) ester group-containing copolymer composition contains the sulfuric acid (salt) ester group-containing monomer (A) and the unsaturated carboxylic acid monomer (B), and the amounts of the sulfuric acid (salt) ester group-containing monomer (A) and the unsaturated carboxylic acid monomer (B) are respectively 1.5 mass% or less and 2 mass% or less relative to 100 mass% of the sulfuric acid (salt) ester group-containing copolymer.

The amount of the sulfuric acid (salt) ester group-containing monomer (A) is more preferably 1 mass% or less, still more preferably 0.5 mass% or less.

The amount of the unsaturated carboxylic acid monomer (B) is more preferably 1.0 mass% or less, still more preferably 0.7 mass% or less.

When the unsaturated carboxylic acid monomer (B) is (meth)acrylic acid, the amount of the unsaturated carboxylic acid monomer (B) is preferably 0.7 mass% or less, more preferably 0.5 mass% or less.

The amount of sulfamic acid in the sulfuric acid (salt) ester group-containing copolymer composition is preferably 10 mass% or less, more preferably 5 mass% or less, still more preferably 1 mass% or less relative to 100 mass% of the sulfuric acid (salt) ester group-containing copolymer.

<Uses of sulfuric acid (salt) ester group-containing copolymer>

The sulfuric acid (salt) ester group-containing copolymer of the invention may be used for coagulants, flocculants, printing inks, adhesives, soil conditioners (soil reforming agents), flame retardants, skin care products, hair care products, additives for shampoo, hair sprays, soaps, and cosmetics, anion exchange resins, dye mordants and aids for fibers and photo films, agents used in papermaking, including pigment spreading agents, paper strengthening agents, emulsifiers, and antiseptic agents, softening agents for fabrics and paper, additives for lubricants, water treatment agents, fiber treatment agents, dispersants, detergent additives, scale inhibitors (agents for scale prevention), sequestrants, thickeners, various binders, and emulsifiers, for example.

<Water treatment agent>

The sulfuric acid (salt) ester group-containing copolymer of the invention is preferably used for water treatment agents. That is, the invention also relates to a method of using the sulfuric acid (salt) ester group-containing copolymer as a water treatment agent.
The invention also relates to a water treatment agent containing the sulfuric acid (salt) ester group-containing copolymer of the invention.
The water treatment agent may optionally contain other additives such as polymerized phosphoric acid salts, phosphonic acid salts, anticorrosives, slime control agents, chelating agents, and pH adjusters.
The water treatment agent is useful for prevention of the formation of scale in a cooling water circulation system, a boiler water circulation system, a seawater desalination plant, a pulp digester, or a black liquor concentrating kettle, for example. The water treatment agent may optionally contain an appropriate aqueous polymer that does not affect the properties and effects thereof.

<Detergent>

The sulfuric acid (salt) ester group-containing copolymer of the invention may be used for detergents.
That is, the invention also relates to a method of using the sulfuric acid (salt) ester group-containing copolymer as a detergent.
The invention also relates to a detergent builder containing the sulfuric acid (salt) ester group-containing copolymer of the invention.
The copolymer can be added as a detergent builder to detergents for various uses such as clothes, tableware, dwellings, hair, bodies, tooth brushing, and cars.
The invention also relates to a detergent composition containing the sulfuric acid (salt) ester group-containing copolymer of the invention.
The detergent composition may contain any amount of the copolymer. For excellent builder performance, the amount of the copolymer in 100 mass% of the whole detergent composition is preferably 0.1 to 15 mass%, more preferably 0.3 to 10 mass%, still more preferably 0.5 to 5 mass%.
The detergent composition usually contains a surfactant or an additive for detergents.
The invention also relates to a detergent composition containing the sulfuric acid (salt) ester group-containing copolymer of the invention and a surfactant.
The specifications of such a surfactant and an additive are not particularly limited and they are appropriately selected based on common knowledge in the field of detergents. The detergent composition may also be a powder detergent composition or a liquid detergent composition.
One or more surfactants selected from the group consisting of anionic surfactants, nonionic surfactants, cationic surfactants, and amphoteric surfactants are used.
The amount of the surfactant(s) in 100 mass% of the whole detergent composition is usually 10 to 60 mass%, preferably 15 to 50 mass%, still more preferably 20 to 45 mass%, particularly preferably 25 to 40 mass%. The detergent composition containing 10 mass% or more of the surfactant(s) can exhibit sufficient detergency, whereas the detergent composition containing 60 mass% or less of the surfactant(s) can sufficiently prevent a decrease in economic efficiency.
Examples of suitable additives include antiredeposition agents for preventing redeposition of pollutants such as alkali builders, chelate builders, and sodium carboxymethyl cellulose, anti-fouling agents such as benzotriazole and ethylene-thiourea, soil release agents, dye transfer inhibitors, softening agents, alkaline substances for pH regulation, perfume, solubilizing agents, fluorescence agents, colorants, frothing agents, foam stabilizers, lustering agents, germicides, bleaching agents, bleaching assistants, enzymes, dyes, and solvents. In the case of a powder detergent composition, zeolite is preferably blended.
The detergent composition may contain a different detergent builder in addition to the sulfuric acid (salt) ester group-containing copolymer of the invention. Non-limiting examples of the different detergent builder include alkali builders such as carbonates, hydrogencarbonates, and silicates; chelate builders such as tripolyphosphates, pyrophosphates, sodium sulfate, nitrilotriacetates, ethylenediaminetetraacetates, citrates, poly(meth)acrylic acid (salts), (meth)acrylic acid copolymers (salts), acrylic acid-maleic acid copolymers (salts), fumaric acid (salts), and zeolite; and polysaccharide carboxyl derivatives such as carboxymethyl cellulose. Examples of counter salts used with these builders include alkaline metals such as sodium and potassium, ammonium, and amines.
The total amount of the additive(s) and the different detergent builder(s) in 100% by mass of the whole detergent composition is preferably 0.1 to 50 mass%, more preferably 0.2 to 40 mass%, still more preferably 0.3 to 35 mass%, particularly preferably 0.4 to 30 mass%, most preferably 0.5 to 20 mass% or less. When the total amount of the additive(s) and the different detergent builder(s) is 0.1 mass% or more, the detergent composition can exhibit sufficient detergency, whereas when the total amount of the additive(s) and the different detergent builder(s) is 50 mass% or less, the detergent

composition can sufficiently prevent a decrease in economic efficiency.

The detergent composition herein conceptually includes synthetic detergents of household detergents, detergents for industrial use such as detergents used in the textile industry, and hard surface detergents, and also includes detergents only for specific uses, such as bleaching detergents in which the performance of one of the ingredients is enhanced.

- Advantageous Effects of Invention

The sulfuric acid (salt) ester group-containing copolymer of the invention having the above-described features can exhibit excellent calcium phosphate scale inhibition performance, and therefore can be suitable for water treatment agents or detergents, for example.

DESCRIPTION OF EMBODIMENTS

Hereinafter, the invention will be described in detail with reference to examples. However, the invention should not be limited to these examples. Unless otherwise mentioned, the term "part(s)" means "part(s) by weight" and "%" means "% by mass".

<Measurement conditions of weight average molecular weight (GPC) >

Apparatus: HLC-8320 GPC, Tosoh Corporation
Detector: RI
Column: SHODEX Asahipak GF-310-HQ, GF-710-HQ, GF-1G 7B, Showa Denko K.K.
Column temperature: 40°C
Flow rate: 0.5 mL/min
Calibration curve: polyacrylic acid standard, Sowa Kagaku Co., Ltd.
Eluent: 0.1 N aqueous sodium acetate solution

<Measurement of non-volatile matter content>

The polymer (composition) was allowed to stand in an oven heated to 120°C for two hours and thus dried. The non-volatile matter content (mass%) and the volatile matter content (mass%) were calculated from the difference between the polymer weights before and after drying.

<Amount of remaining monomer>

The monomers and other components were quantified by liquid chromatography under the following conditions unless otherwise stated.

Measurement apparatus: 8020 series, Tosoh Corporation
Column: CAPCELL PAK C1 UG120 (three pieces), Shiseido Company, Limited
Temperature: 40.0°C
Eluent: 10 mmol/L aqueous disodium hydrogen phosphate dodecahydrate solution (pH was controlled to 7 with phosphoric acid)/acetonitrile = 45/55 (volume ratio)
Flow rate: 1.0 ml/min
Detector: RI
Measurement apparatus: e-2695, Waters Corporation
Detector: UV detector (200 nm)
Column: SHODEX RSpak DE-413L, Showa Denko K.K.
Temperature: 40.0°C
Eluent: 0.1% aqueous phosphoric acid solution
Flow rate: 1.0 ml/min

Table 1 shows the results.

<Calcium phosphate scale prevention (inhibition) performance (%)>

In a 225-ml screw top bottle were placed deionized water, a boric acid/sodium borate pH buffer solution, an aqueous calcium chloride solution, each of the polymer aqueous solutions prepared in the examples and the comparative examples, and an aqueous sodium phosphate solution in the stated order to prepare 100 ml of a test solution having a pH of 8.6, a polymer concentration of 6 mg/L or 7 mg/L in terms of non-volatile matter content, a calcium hardness of 200 mg $CaCO_3$/L, and a phosphate ion of 10 mg $PO_4^{3-}$/L. The bottle was sealed and allowed to stand at 60°C for 24 hours. The test solution was filtered through a filter paper having a pore size of 0.1 μm, and the concentration of residual phosphoric acid ions in the filtrate was analyzed. Separately, the same test solution but not containing the polymer was prepared as a blank test solution. The blank test solution was treated in the same manner as for the polymer-containing test solution, and the concentration of residual phosphoric acid ions was analyzed. The calcium phosphate scale prevention rate was determined by the following formula. Table 1 shows the results.

$$\text{Calcium phosphate scale prevention rate (\%)} = 100 \times (R - Q)/(P - Q)$$

P: Concentration of phosphoric acid ions charged (mg/L)
Q: Concentration of residual phosphoric acid ions in the blank (mg/L)
R: Concentration of residual phosphoric acid ions (mg/L)

<Measurement of chelating ability (ability to capture calcium ions)>

In a 100-mL beaker was placed 50 g of a 0.001 mol/L aqueous calcium chloride solution, and then 10 mg of a copolymer in solid content was added thereto. Subsequently, the pH of the aqueous solution was controlled to 9 to 11 with dilute sodium hydroxide. Thereafter, 1 ml of a 4 mol/L aqueous potassium chloride solution was added thereto as a stabilizer for a calcium ion electrode under stirring.

The amount of free calcium ions was measured with an ion analyzer (model EA920, Orion Corporation) and a calcium ion electrode (model 93-20, Orion Corporation), and the number of milligrams of calcium ions chelated, in terms of calcium carbonate, per gram of the copolymer (i.e., calcium ion-capturing ability which was a kind of chelating ability) was calculated. The ability to capture calcium ions was expressed in "mg $CaCO_3$/g".

<Carbon black dispersing ability>

First, ion exchange water was added to 67.56 g of glycine, 52.6 g of sodium chloride, and 60 mL of a 1 mol/L aqueous sodium chloride solution to prepare 600 g of a glycine buffer solution.

Then, pure water was added to 0.3268 g of calcium chloride dihydrate and 60 g of the glycine buffer solution to prepare 1000 g of a dispersion.

Next, 0.03 g of carbon black was placed in a test tube (test tube with rim and guide line, 30 mL, 18 mm diameter x 180 mm height, Maruemu Corporation), followed by addition of 27 g of the dispersion and 3 g of a 0.1% by weight aqueous solution of a test sample (polymer composition) (in terms of solid content) to the test tube. Then, the test tube was sealed and shaken to uniformly disperse the carbon black. The test tube was allowed to stand for one week, and then the state of the contents in the test tube was evaluated using the following criteria by visual observation with a patterned paper placed behind the test tube. Table 2 shows the results.

<Evaluation criteria>

Good: The dispersion was black in color.
Fair: The dispersion was light gray in color, and the pattern was seen through the dispersion.
Poor: The dispersion was transparent.

A darker-colored dispersion through which the pattern was harder to see was deemed to have better carbon black dispersing ability.

<Clay dispersing ability>

First, ion exchange water was added to 67.56 g of glycine, 52.6 g of sodium chloride, and 60 ml of a 1 mol/l aqueous NaOH solution to prepare 600 g of a glycine buffer solution.

Then, pure water was added to 0.3268 g of calcium chloride dihydrate and 60 g of the glycine buffer solution to prepare 1000 g of a dispersion.

Separately, a 0.1% aqueous polymer solution in terms of solid content was prepared. Then, a test tube having a volume of about 30 cc commonly used in experiments was charged with 0.3 g of a clay of JIS test powder 1-Class 8 (KANTO loam, fine particles. The Association of Powder Process Industry and Engineering, JAPAN), 27 g of the dispersion, and 3 g of the 0.1% aqueous polymer solution to prepare a test solution.

The test solution had a calcium concentration of 200 ppm in terms of calcium carbonate.

The test tube was sealed with parafilm and gently shaken to disperse the clay throughout the solution, followed by shaking up and down 20 times.

The test tube was allowed to stand at a place away from direct sunlight for 20 hours, and 5 ml of the supernatant was removed from the test solution with a volumetric pipette.

The supernatant liquid was placed in a cell having an optical path length of 1 cm and subjected to absorbance (ABS) measurement using a UV spectroscope (UV-1800, SHIMADZU) at a wavelength of 380 nm. The resulting value indicates clay dispersing ability in high hardness water. Table 2 shows the results.

<Miscibility>

(1) A mixture of 1 g of polyoxyethylene alkyl ether (C12-C14 secondary alcohol with 9 mol of ethylene oxide added there to on average) and 1 g of an aqueous polymer composition solution (30 mass% or 5 mass%) was allowed to stand at room temperature for one hour.
(2) A case without turbidity was evaluated as good, and a case with turbidity or separation was evaluated as poor. The case without turbidity indicates that the detergent containing the polymer composition can be in a uniform state for a long period of time. Table 2 shows the results.

<Synthesis Example 1: Sulfuric acid (salt) ester group-containing monomer (1)>

An isoprenol ethylene oxide 10 mol adduct (hereinafter, also referred to as "IPN10") was sulfated with a sulfating agent by a usual method (Hiroshi Horiguchi, 1975, "New Surfactants (Shin-Kaimen Kasseizai)", Mitsui Shuppan Co., Ltd., pp. 322-326 and Ryohei Oda and Kazuhiro Sachimura, 1965, "Synthesis of Surfactants I (Kaimen Ksseizai Gousei-hen I)", Maki Shoten, pp. 105-110), and was diluted with water to prepare a 80% aqueous monomer solution as a monomer composition (1).

<Synthesis Example 2: Monomer composition (2) for comparative examples: IPES10>

A 5-L four-necked flask equipped with a stirring blade, a thermometer, and a condenser was charged with 1737 g of an isoprenol ethylene oxide adduct having an average number of moles of ethylene oxide of 10 mol (hereinafter, also referred to as "IPN10", hydroxyl value: 106.5 (mg KOH/g)), 1692 g of epichlorohydrin, and 411 g of 48% NaOH. The contents were reacted for six hours by stirring while the temperature was maintained at 50°C. After the reaction, the salt generated was removed to obtain an organic layer. The epichlorohydrin and water were removed from the organic layer to obtain 1779 g of a reaction solution containing an intermediate (A) (a compound represented by the formula (1) having a structure in which the average value of n is 10, $R^1$ is a $CH_2CH_2$ group, $R^2$ is a $CH_2CH_2$ group, and $R^3$ is a $CH_3$ group). The results of analysis by liquid chromatography showed that the reaction solution contained 1467 g of the intermediate (A) and 108 g of IPN10. Next, a 5-L four-necked flask equipped with a stirring blade, a thermometer, a condenser, and a dropping funnel was charged with the reaction solution in an amount such that the amount of the intermediate (A) was 1247 g, and the solution was heated under stirring so that the internal temperature was 50°C. To the reaction solution were slowly added dropwise over one hour a liquid mixture of 90.4 g of 48% NaOH, 1796.8 g of pure water, 269.9 g of 64% sodium bisulfite (hereinafter, also referred to as "SBS") in terms of $SO_2$, and 4H-TEMPO in an amount of 2500 ppm relative to the sodium bisulfite while the internal temperature was maintained at 50°C. The reaction solution was additionally stirred for four hours. Thus, 3671 g of a solution of a monomer composition (2) containing a monomer (2) (hereinafter, referred to as IPES) as a major constituent was obtained.

<Example 1: Copolymer 1>

A 1000-mL glass separable flask equipped with a reflux condenser and a stirrer (paddle impellers) was charged with 170.9 g of pure water and 1.8 g of a 0.6% aqueous solution of Mohr's salt, and the contents were heated to 87°C under stirring. Then, under stirring, 122.1 g of a 80% aqueous solution of acrylic acid (hereinafter, also referred to as "80% AA"), 6.0 g of 48% sodium hydroxide (hereinafter, also referred to as "48% NaOH"), 127.1 g of the 80% monomer composition (1), 52.6 g of a 15% aqueous solution of sodium persulfate (hereinafter, also referred to as "15% NaPS"), and 19.4 g of 35% SBS were added dropwise to the flask through different nozzles. The dropwise additions of the solutions were started simultaneously. The addition times of the solutions were as follows: the 80% AA and the 48% NaOH were each added over 180 min, the 80% monomer composition (1) was added over 160 min, the 15% NaPS was added over 210 min, and the 35% SBS was added over 170 min. Each of the solutions was continuously added dropwise at a constant rate. After the dropwise addition of the 15% NaPS solution, the polymerization reaction solution was maintained (aged) at 87°C for another 30 minutes to complete the polymerization. Thus, an aqueous solution of a copolymer (1) was obtained. The copolymer (1) had a weight average molecular weight of 9000.

<Example 2: Copolymer 2>

A 1000-mL glass separable flask equipped with a reflux condenser and a stirrer (paddle impellers) was charged with 99.5 g of pure water and 1.4 g of a 0.6% aqueous solution of Mohr's salt, and the contents were heated to 87°C under stirring. Then, under stirring, 92.9 g of 80% AA, 49.6 g of a 40% aqueous solution of sodium 3-allyloxy-2-hydroxy-1-propanesulfonate (hereinafter, also referred to as "40% HAPS"), 76.8 g of the 80% monomer composition (1), 64.8 g of 15% NaPS, and 14.9 g of 35% SBS were added dropwise to the flask through different nozzles. The dropwise additions of the solutions were started simultaneously. The addition times of the solutions were as follows: the 80% AA was added over 180 min, the 40% HAPS was added over a total of 120 min, where a 16.5-g portion was added over the initial 30 min and a 33.1-g portion was added over the last 90 min, the 80% monomer composition (1) was added over 170 min, the 15% NaPS was added over a total of 200 min, where a 24.3-g portion was added over the initial 120 min and a 40.5-g portion was added over the last 80 min, and the 35% SBS was added over 170 min. Each of the solutions was continuously added dropwise at a constant rate. After the dropwise addition of the 15% NaPS solution, the polymerization reaction solution was maintained (aged) at 87°C for another 30 minutes to complete the polymerization. Thus, an aqueous solution of a copolymer (2) was obtained. The copolymer (2) had a weight average molecular weight of 9500.

<Example 3: Copolymer 3>

A 1000-mL glass separable flask equipped with a reflux condenser and a stirrer (paddle impellers) was charged with 142.1 g of pure water and 1.8 g of a 0.6% aqueous solution of Mohr's salt, and the contents were heated to the boiling point under stirring. Then, under stirring, 150.7 g of 80% AA, 7.0 g of 48% NaOH, 155.4 g of a 75% aqueous monomer solution as the monomer composition (1), 25.9 g of 15% NaPS, and 17.3 g of a 45% aqueous solution of sodium hypophosphite (hereinafter, also referred to as "45% SHP") were added dropwise to the flask through different nozzles. The dropwise additions of the solutions were started simultaneously. The addition times of the solutions were as follows: the 80% AA and the 48% NaOH were each added over 180 min, the 75% monomer composition (1) was added over 170 min, the 15% NaPS was added over a total of 210 min, where a 19.4-g portion was added over the initial 180 min and a 6.5-g portion was added over the last 30 min, and the 45% SHP was added over 180 min. Each of the solutions was continuously added dropwise at a constant rate. After the dropwise addition of the 15% NaPS solution, the polymerization reaction solution was maintained (aged) at the boiling point for another 30 minutes to complete the polymerization. Thus, an aqueous solution of a copolymer (3) was obtained. The copolymer (3) had a weight average molecular weight of 9500.

<Example 4: Copolymer 4>

A 1000-mL glass separable flask equipped with a reflux condenser and a stirrer (paddle impellers) was charged with 142.1 g of pure water and 1.8 g of a 0.6% aqueous solution of Mohr's salt, and the contents were heated to 87°C under stirring. Then, under stirring, 150.7 g of 80% AA, 7.0 g of 48% NaOH, 155.4 g of the 75% monomer composition (1), 25.9 g of 15% NaPS, and 17.3 g of 45% SHP were added dropwise to the flask through different nozzles. The dropwise additions of the solutions were started simultaneously. The addition times of the solutions were as follows: the 80% AA and the 48% NaOH were each added over 180 min, the 75% monomer composition (1) was added over 170 min, the 15% NaPS was added over a total of 210 min, where a 19.4-g portion was added over the initial 180 min and a 6.5-g portion was added over the last 30 min, and the 45% SHP was added over 180 min. Each of the solutions was continuously added dropwise at a constant rate. After the dropwise addition of the 15% NaPS solution, the polymerization

reaction solution was maintained (aged) at 87°C for another 30 minutes to complete the polymerization. Thus, an aqueous solution of a copolymer (4) was obtained. The copolymer (4) had a weight average molecular weight of 10500.

<Example 5: Copolymer 5>

A 1000-mL glass separable flask equipped with a reflux condenser and a stirrer (paddle impellers) was charged with 105.4 g of pure water and 1.8 g of a 0.6% aqueous solution of Mohr's salt, and the contents were heated to 87°C under stirring. Then, under stirring, 147.1 g of 80% AA, 7.2 g of 48% NaOH, 151.7 g of the 75% monomer composition (1), 63.4 g of 15% NaPS, and 23.4 g of 35% SBS were added dropwise to the flask through different nozzles. The dropwise additions of the solutions were started simultaneously. The addition times of the solutions were as follows: the 80% AA and the 48% NaOH were each added over 180 min, the 80% monomer composition (1) was added over 170 min, the 15% NaPS was added over 210 min, and the 35% SBS was added over 170 min. Each of the solutions was continuously added dropwise at a constant rate. After the dropwise addition of the 15% NaPS solution, the polymerization reaction solution was maintained (aged) at 87°C for another 30 minutes to complete the polymerization. Thus, an aqueous solution of a copolymer (5) was obtained. The copolymer (5) had a weight average molecular weight of 10500.

<Example 6: Copolymer 6>

A 1000-mL glass separable flask equipped with a reflux condenser and a stirrer (paddle impellers) was charged with 138.0 g of pure water and 1.8 g of a 0.6% aqueous solution of Mohr's salt, and the contents were heated to 87°C under stirring. Then, under stirring, 169.4 g of 80% AA, 8.3 g of 48% NaOH, 136.7 g of the 75% monomer composition (1), 27.2 g of 15% NaPS, and 18.5 g of 35% SBS were added dropwise to the flask through different nozzles. The dropwise additions of the solutions were started simultaneously. The addition times of the solutions were as follows: the 80% AA and the 48% NaOH were each added over 180 min, the 75% monomer composition (1) was added over 170 min, the 15% NaPS was added over 210 min, and the 35% SBS was added over 170 min. Each of the solutions was continuously added dropwise at a constant rate. After the dropwise addition of the 15% NaPS solution, the polymerization reaction solution was maintained (aged) at 87°C for another 30 minutes to complete the polymerization. Thus, an aqueous solution of a copolymer (6) was obtained. The copolymer (6) had a weight average molecular weight of 22000.

<Example 7: Copolymer 7>

A 1000-mL glass separable flask equipped with a reflux condenser and a stirrer (paddle impellers) was charged with 136.3 g of pure water and 1.8 g of a 0.6% aqueous solution of Mohr's salt, and the contents were heated to 87°C under stirring. Then, under stirring, 165.6 g of 80% AA, 7.7 g of 48% NaOH, 124.6 g of the 80% monomer composition (1), 27.9 g of 15% NaPS, and 35.4 g of 35% SBS were added dropwise to the flask through different nozzles. The dropwise additions of the solutions were started simultaneously. The addition times of the solutions were as follows: the 80% AA and the 48% NaOH were each added over 180 min, the 80% monomer composition (1) was added over 170 min, the 15% NaPS was added over a total of 210 min, where a 20.9-g portion was added over the initial 180 min and a 7.0-g portion was added over the last 30 min, and the 35% SBS was added over 170 min. Each of the solutions was continuously added dropwise at a constant rate. After the dropwise addition of the 15% NaPS solution, the polymerization reaction solution was maintained (aged) at 87°C for another 30 minutes to complete the polymerization. Thus, an aqueous solution of a copolymer (7) was obtained. The copolymer (7) had a weight average molecular weight of 16500.

<Example 8: Copolymer 8>

A 1000-mL glass separable flask equipped with a reflux condenser and a stirrer (paddle impellers) was charged with 117.0 g of pure water and 1.8 g of a 0.6% aqueous solution of Mohr's salt, and the contents were heated to 87°C under stirring. Then, under stirring, 186.2 g of 80% AA, 8.6 g of 48% NaOH, 103.0 g of the 80% monomer composition (1), 61.4 g of 15% NaPS, and 22.0 g of 35% SBS were added dropwise to the flask through different nozzles. The dropwise additions of the solutions were started simultaneously. The addition times of the solutions were as follows: the 80% AA and the 48% NaOH were each added over 180 min, the 80% monomer composition (1) was added over 175 min, the 15% NaPS was added over 210 min, and the 35% SBS was added over 170 min. Each of the solutions was continuously added dropwise at a constant rate. After the dropwise addition of the 15% NaPS solution, the polymerization reaction solution was maintained (aged) at 87°C for another 30 minutes to complete the polymerization. Thus, an aqueous solution of a copolymer (8) was obtained. The copolymer (8) had a weight average molecular weight of 12500.

<Example 9: Copolymer 9>

A 1000-mL glass separable flask equipped with a reflux condenser and a stirrer (paddle impellers) was charged with 173.2 g of pure water and 1.8 g of a 0.6% aqueous solution of Mohr's salt, and the contents were heated to 87°C under stirring. Then, under stirring, 128.6 g of 80% AA, 6.0 g of 48% NaOH, 95.6 g of the 80% monomer composition (1), 19.1 g of an isoprenol ethylene oxide 10 mol adduct (hereinafter, IPN10), 55.3 g of 15% NaPS, and 20.4 g of 35% SBS were added dropwise to the flask through different nozzles. The dropwise additions of the solutions were started simultaneously. The addition times of the solutions were as follows: the 80% AA and the 48% NaOH were each added over 180 min, the 80% monomer composition (1) and IPN10 were each added over 175 min, the 15% NaPS was added over 210 min, and the 35% SBS was added over 170 min. Each of the solutions was continuously added dropwise at a constant rate. After the dropwise addition of the 15% NaPS solution, the polymerization reaction solution was maintained (aged) at 87°C for another 30 minutes to complete the polymerization. Thus, an aqueous solution of a copolymer (9) was obtained. The copolymer (9) had a weight average molecular weight of 8000.

<Comparative Example 1: Comparative copolymer 1>

A 1000-mL glass separable flask equipped with a reflux condenser and a stirrer (paddle impellers) was charged with 299.6 g of pure water and 2.8 g of a 0.6% aqueous solution of Mohr's salt, and the contents were heated to 87°C under stirring. Then, under stirring, 217.3 g of 80% AA, 10.1 g of 48% NaOH, 141.4 g of IPN10, 85.8 g of 15% NaPS, and 40.8 g of 35% SBS were added dropwise to the flask through different nozzles. The dropwise additions of the solutions were started simultaneously.
The addition times of the solutions were as follows: the 80% AA and the 48% NaOH were each added over 180 min, the IPN10 was added over 150 min, the 15% NaPS was added over a total of 200 min, where a 41.1-g portion was added over the initial 130 min and a 44.7-g portion was added over the last 70 min, and the 35% SBS was added over 170 min. Each of the solutions was continuously added dropwise at a constant rate. After the dropwise addition of the 15% NaPS solution, the polymerization reaction solution was maintained (aged) at 87°C for another 30 minutes to complete the polymerization. Thus, an aqueous solution of a comparative copolymer (1) was obtained. The comparative copolymer (1) had a weight average molecular weight of 9000.

<Comparative Example 2: Comparative copolymer 2>

A 1000-mL glass separable flask equipped with a reflux condenser and a stirrer (paddle impellers) was charged with 150.8 g of pure water and 1.8 g of a 0.6% aqueous solution of Mohr's salt, and the contents were heated to 87°C under stirring. Then, under stirring, 89.5 g of 80% AA, 90.4 g of 40% HAPS, 87.3 g of IPN10, 61.9 g of 15% NaPS, and 18.4 g of 35% SBS were added dropwise to the flask through different nozzles. The dropwise additions of the solutions were started simultaneously. The addition times of the solutions were as follows: the 80% AA was added over 180 min, the 40% HAPS was added over 40 min, the IPN10 was added over 170 min, the 15% NaPS was added over a total of 200 min, where a 29.2-g portion was added over the initial 130 min and a 32.7-g portion was added over the last 70 min, and the 35% SBS was added over 170 min. Each of the solutions was continuously added dropwise at a constant rate. After the dropwise addition of the 15% NaPS solution, the polymerization reaction solution was maintained (aged) at 87°C for another 30 minutes to complete the polymerization. Thus, an aqueous solution of a comparative copolymer (2) was obtained. The comparative copolymer (2) had a weight average molecular weight of 11000.

<Comparative Example 3: Comparative copolymer 3>

A 1000-mL glass separable flask equipped with a reflux condenser and a stirrer (paddle impellers) was charged with 51.2 of pure water and 1.8 g of a 0.6% aqueous solution of Mohr's salt, and the contents were heated to 87°C under stirring. Then, under stirring, 70.7 g of 80% AA, 304.5 g of the monomer composition (2), 51.1 g of 15% NaPS, and 20.6 g of 35% SBS were added dropwise to the flask through different nozzles. The dropwise additions of the solutions were started simultaneously. The addition times of the solutions were as follows: the 80% AA was added over 180 min, the monomer composition (2) was added over 170 min, the 15% NaPS was added over a total of 200 min, where a 19.2-g portion was added over the initial 120 min and a 31.9-g portion was added over the last 80 min, and the 35% SBS was added over 170 min. Each of the solutions was continuously added dropwise at a constant rate. After the dropwise addition of the 15% NaPS solution, the polymerization reaction solution was maintained (aged) at 87°C for another 30 minutes to complete the polymerization. Thus, an aqueous solution of a comparative polymer (3) was obtained. The comparative polymer (3) had a weight average molecular weight of 11000.

<Comparative Example 4: Comparative copolymer 4>

A 1000-mL glass separable flask equipped with a reflux condenser and a stirrer (paddle impellers) was charged with 53.0 g of pure water and 2.1 g of a 0.6% aqueous solution of Mohr's salt, and the contents were heated to 87°C under stirring. Then, under stirring, 85.3 g of 80% AA, 86.1 g of 40% HAPS, 278.9 g of the monomer composition (2), 67.4 g of 15% NaPS, and 27.2 g of 35% SBS were added dropwise to the flask through different nozzles. The dropwise additions of the solutions were started simultaneously. The addition times of the solutions were as follows: the 80% AA was added over 180 min, the 40% HAPS was added over 30 min, the monomer composition (2) was added over 170 min, the 15% NaPS was added over a total of 200 min, where a 25.3-g portion was added over the initial 120 min and a 42.1-g portion was added over the last 80 min, and the 35% SBS was added over 170 min. Each of the solutions was continuously added dropwise at a constant rate. After the dropwise addition of the 15% NaPS solution, the polymerization reaction solution was maintained (aged) at 87°C for another 30 minutes to complete the polymerization. Thus, an aqueous solution of comparative polymer (4) was obtained. The comparative polymer (4) had a weight average molecular weight of 13000.

<Comparative Example 5: Comparative copolymer 5>

A 1000-mL glass separable flask equipped with a reflux condenser and a stirrer (paddle impellers) was charged with 103.3 g of pure water and 1.8 g of a 0.6% aqueous solution of Mohr's salt, and the contents were heated to 87°C under stirring. Then, under stirring, 186.0 g of 80% AA, 247.2 g of 40% HAPS, 67.2 g of 15% NaPS, 28.8 g of 35% SBS, and 1.8 g of 35% hydrogen peroxide (hereinafter, referred to as HP) were added dropwise to the flask through different nozzles. The dropwise additions of the solutions other than HP were started simultaneously. The dropwise addition of HP was started 185 min after the start of addition of the other materials. The addition times of the solutions were as follows: the 80% AA was added over 180 min, the 40% HAPS was added over a total of 140 min, where a 61.8-g portion was added over the initial 20 min and a 185.4 portion was added over the last 120 min, the 15% NaPS was added over a total of 200 min, where a 31.9-g portion was added over the initial 130 min and a 35.3-g portion was added over the last 70 min, the 35% SBS was added over 170 min, and the HP was added over 5 min. Each of the solutions was continuously added dropwise at a constant rate. After the dropwise addition of the 15% NaPS solution, the polymerization reaction solution was maintained (aged) at 87°C for another 30 minutes to complete the polymerization. Thus, an aqueous solution of a comparative polymer (5) was obtained. The comparative polymer (5) had a weight average molecular weight of 10500.

<Comparative Example 6: Comparative copolymer 6>

A 2.5-L stainless steel separable flask equipped with a thermometer, a stirrer, and a reflux condenser was charged with 149.8 g of pure water and 1.2 g of a 0.6% aqueous solution of Mohr's salt, and the contents were heated to 85°C under stirring. Then, under stirring, 385.1 g of 80% AA, 17.8 g of 48% NaOH, 51.8 g of 15% NaPS, and 63.6 g of 35% SBS were added dropwise to the flask through different nozzles. The dropwise additions of the solutions were started simultaneously. The addition times of the solutions were as follows: the 80% AA was added over 180 min, the 15% NaPS was added over 185 min, and the 5% SBS was added over 175 min. After the dropwise addition of the 15% NaPS solution, the polymerization reaction solution was maintained (aged) at 87°C for another 30 minutes and neutralized by addition of 330.7 g of 48% NaOH. Thus, an aqueous solution of a comparative polymer (6) was obtained. The comparative polymer (6) had a weight average molecular weight of 7000.

<Comparative Example 7: Comparative copolymer 7>

A 1000-mL glass separable flask equipped with a reflux condenser and a stirrer (paddle impellers) was charged with 72.4 g of pure water and 2.1 g of a 0.6% aqueous solution of Mohr's salt, and the contents were heated to 87°C under stirring. Then, under stirring, 131.2 g of 80% AA, 340.4 g of 40% HAPS, 24.3 g of 30% NaPS, 28.2 g of 35% SBS, and 1.5 of 35% hydrogen peroxide (hereinafter, referred to as HP) were added dropwise to the flask through different nozzles. The dropwise additions of the solutions other than HP were started simultaneously. The dropwise addition of HP was started 185 min after the start of addition of the other materials. The addition times of the solutions were as follows: the 80% AA was added over 180 min, the 40% HAPS was added over a total of 120 min, where a 170.2-g portion was added over the initial 30 min and a 170.2 portion was added over the last 90 min, the 30% NaPS was added over a total of 200 min, where a 14.6-g portion was added over the initial 130 min and a 9.7-g portion was added over the last 70 min, the 35% SBS was added over 170 min, and the HP was added over 5 min. Each of the solutions was continuously added dropwise at a constant rate. After the dropwise addition of the 30% NaPS solution, the polymerization reaction solution was maintained (aged) at 87°C for another 30 minutes to complete the polymerization. Thus, an aqueous

solution of a comparative polymer (7) was obtained. The comparative polymer (7) had a weight average molecular weight of 9000.

<Comparative Example 8: Comparative copolymer 8>

A 1000-mL glass separable flask equipped with a reflux condenser and a stirrer (paddle impellers) was charged with 73.9 g of pure water and 2.1 g of a 0.6% aqueous solution of Mohr's salt, and the contents were heated to 87°C under stirring. Then, under stirring, 141.6 g of 80% AA, 422.2 g of 40% HAPS, 27.4 g of 30% NaPS, 31.8 g of 35% SBS, and 1.7 g of 35% hydrogen peroxide (hereinafter, referred to as HP) were added dropwise to the flask through different nozzles. The dropwise additions of the solutions other than HP were started simultaneously. The dropwise addition of HP was started 185 min after the start of addition of the other materials. The addition times of the solutions were as follows: the 80% AA was added over 180 min, the 40% HAPS was added over a total of 60 min, where a 211.1-g portion was added over the initial 20 min and a 211.1-g portion was added over the last 40 min, the 30% NaPS was added over a total of 200 min, where a 16.4-g portion was added over the initial 130 min and a 11.0-g portion was added over the last 70 min, the 35% SBS was added over 170 min, and the HP was added over 5 min. Each of the solutions was continuously added dropwise at a constant rate. After the dropwise addition of the 30% NaPS solution, the polymerization reaction solution was maintained (aged) at 87°C for another 30 minutes to complete the polymerization. Thus, an aqueous solution of a comparative polymer (8) was obtained. The comparative polymer (8) had a weight average molecular weight of 10000.

[Table 1]

| | Monomer composition ratio (mol%) | Initiator and chain transfer agent | Mw | Amount of residual monomer (ppm) | | | | Ca capturing ability | Ca phosphate scale prevention performance (%) | |
|---|---|---|---|---|---|---|---|---|---|---|
| | | | | AA | Monomer (1) | HAPS | IPN | | Copolymer 6mg/L | Copolymer 7mg/L |
| Example 1 | AA/Monomer (1) =89.3/10.7 | NaPS/SBS/Fe | 9000 | 930 | 200 | - | - | 140 | 74 | 89 |
| Example 2 | AA/HAPS/Monomer (1) =84.5/7.4/8.1 | | 9500 | 730 | 0 | 3000 | - | 150 | 56 | 86 |
| Example 3 | AA/Monomer (1) =90/10 | NaPS/SHP | 9500 | 40 | 450 | - | - | - | 90 | >95 |
| Example 4 | AA/Monomer (1) =90/10 | | 10500 | 6 | 1200 | - | - | - | 91 | >95 |
| Example 5 | AA/Monomer (1) =90/10 | NaPS/SB1S/Fe | 10500 | 2600 | 5500 | - | - | - | 58 | - |
| Example 6 | AA/Monomer (1) =92/8 | | 22000 | 5400 | 650 | - | - | - | 23 | 64 |
| Example 7 | AA/Monomer (1) =92/8 | | 16500 | 1600 | 6250 | - | - | - | 30 | 63 |
| Example 8 | AA/Monomer (1) =94/6 | | 12500 | 550 | 0 | - | - | - | - | - |
| Example 9 | AA/Monomer (1)/IPN =90/7.7/2.3 | | 8000 | 2000 | 1100 | - | 0 | - | 48 | 80 |

(continued)

| | Monomer composition ratio (mol%) | Initiator and chain transfer agent | Mw | Amount of residual monomer (ppm) | | | | Ca capturing ability | Ca phosphate scale prevention performance (%) | |
|---|---|---|---|---|---|---|---|---|---|---|
| | | | | AA | Monomer (1) | HAPS | IPN | | Copolymer 6mg/L | Copolymer 7mg/L |
| Comparative Example 1 | AA/IPN10 =90.0/10.0 | NaPS/SBS/Fe | 9000 | 4200 | - | - | 1600 | 170 | 37 | 56 |
| Comparative Example 2 | AA/HAPS/IPN10 =75/12.5/12.5 | | 11000 | 0 | - | 7500 | 0 | 90 | <15 | 19 |
| Comparative Example 3 | AA/IPES =82/18 | | 11000 | 2100 | - | - | - | 60 | 80 | 93 |
| Comparative Example 4 | AA/HAPS/IPES =85/12.5/12.5 | | 13000 | 200 | - | 5800 | - | 60 | 50 | 86 |
| Comparative Example 5 | AA/HAPS =82/18 | | 10500 | 6 | - | 4300 | - | 200 | 15 | 37 |
| Comparative Example 6 | Polyacrylic acid | | 7000 | 10 | - | - | - | 250 | <15 | <15 |
| Comparative Example 7 | AA/HAPS =70/30 | | 9000 | 0 | - | 23000 | - | - | 37 | 62 |
| Comparative Example 8 | AA/HAPS =67/33 | | 10000 | 0 | - | 26000 | - | - | 22 | 55 |

[Table 2]

| | Monomer composition ratio (mol%) | Initiator and chain transfer agent | Mw | Carbon black dispersing ability | Clay dispersing ability | Miscibility (1) | Miscibility (2) |
|---|---|---|---|---|---|---|---|
| Example 1 | AA/Monomer (1) =89.3/10.7 | NaPS/SBS/Fe | 9000 | Good | 0.913 | - | Good |
| Example 2 | AA/HAPS/ Monomer (1) =84.5/7.4/8.1 | | 9500 | Good | 0.781 | - | Good |
| Example 3 | AA/Monomer (1) =90/10 | NaPS/SHP | 9500 | Good | - | Good | Good |
| Example 4 | AA/Monomer (1) =90/10 | | 10500 | Good | - | Good | Good |
| Example 5 | AA/Monomer (1) =90/10 | NaPS/SBS/Fe | 10500 | Good | - | - | Good |
| Example 6 | AA/Monomer (1) =92/8 | | 22000 | Good | - | - | Good |
| Example 7 | AA/Monomer (1) =92/8 | | 16500 | Good | - | - | Good |
| Example 8 | AA/Monomer (1) =94/6 | | 12500 | Good | - | - | Good |
| Example 9 | AA/Monomer (1)/IPN =90/7.7/2.3 | | 8000 | Good | - | - | Good |
| Comparative Example 1 | AA/IPN10 =90.0/10.0 | NaPS/SBS/Fe | 9000 | Good | 0.913 | - | - |
| Comparative Example 2 | AA/ HAPS/IPN10 =75/12.5/12.5 | | 11000 | Good | 1.056 | Poor | - |
| Comparative Example 3 | AA/IPES =82/18 | | 11000 | Good | 1.285 | Poor | - |
| Comparative Example 4 | AA/HAPS/ IPES =85/12.5/12.5 | | 13000 | Good | 1.572 | - | - |
| Comparative Example 5 | AA/HAPS =82/18 | | 10500 | Fair | 0.873 | Poor | Good |
| Comparative Example 6 | Polyacrylic acid | | 7000 | Poor | 0.782 | Poor | Poor |
| Comparative Example 7 | AA/HAPS =70/30 | | 9000 | Poor | - | - | - |
| Comparative Example 8 | AA/HAPS =67/33 | | 10000 | Poor | - | - | - |
| Miscibility (1) Polyoxyethylene alkyl ether (1 g) + 30% aqueous polymer solution (1 g)<br>Miscibility (2) Polyoxyethylene alkyl ether (1 g) + 5% aqueous polymer solution (1 g) | | | | | | | |

**Claims**

1. A sulfuric acid ester group and/or sulfuric acid ester salt group-containing copolymer comprising:

   a structural unit (a) derived from a sulfuric acid ester group or sulfuric acid ester salt group-containing monomer (A); and
   a structural unit (b) derived from an unsaturated carboxylic acid monomer (B),
   the sulfuric acid ester group or sulfuric acid ester salt group-containing monomer (A) being represented by the formula (1):

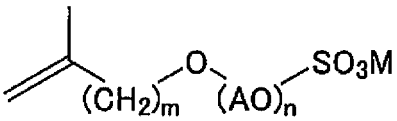

(1)

   wherein AO is an oxyalkylene group, m is a number of 2 to 5, n is an average number of moles of oxyalkylene group added and a number of 1 to 300, and M is a cation.

2. The sulfuric acid ester group and/or sulfuric acid ester salt group-containing copolymer according to claim 1, wherein m in the formula (1) is 2.

3. The sulfuric acid ester group and/or sulfuric acid ester salt group-containing copolymer according to claim 1 or 2, wherein n in the formula (1) is a number of 2 to 50.

4. The sulfuric acid ester group and/or sulfuric acid ester salt group-containing copolymer according to any one of claims 1 to 3,
   wherein a proportion of the structural unit (a) is 1 to 20 mol% in 100 mol% of all structural units of the copolymer.

5. The sulfuric acid ester group and/or sulfuric acid ester salt group-containing copolymer according to any one of claims 1 to 4,
   wherein the copolymer is used for a water treatment agent.

6. The sulfuric acid ester group and/or sulfuric acid ester salt group-containing copolymer according to any one of claims 1 to 4,
   wherein the copolymer is used for a detergent.

7. A water treatment agent comprising the sulfuric acid ester group and/or sulfuric acid ester salt group-containing copolymer according to any one of claims 1 to 4.

8. A detergent composition comprising the sulfuric acid ester group and/or sulfuric acid ester salt group-containing copolymer according to any one of claims 1 to 4.

9. A sulfuric acid ester group and/or sulfuric acid ester salt group-containing copolymer composition comprising:

   the sulfuric acid ester group and/or sulfuric acid ester salt group-containing copolymer according to any one of claims 1 to 4; and
   a sulfuric acid ester group or sulfuric acid ester salt group-containing monomer (A) and/or an unsaturated carboxylic acid monomer (B),
   an amount of the sulfuric acid ester group or sulfuric acid ester salt group-containing monomer (A) being 1.5 mass% or less relative to 100 mass% of the sulfuric acid ester group and/or sulfuric acid ester salt group-containing copolymer,
   an amount of the unsaturated carboxylic acid monomer (B) being 2 mass% or less relative to 100 mass% of the sulfuric acid ester group and/or sulfuric acid ester salt group-containing copolymer.

10. The sulfuric acid ester group and/or sulfuric acid ester salt group-containing copolymer composition according to claim 9,
   wherein an amount of sulfamic acid in the sulfuric acid ester group and/or sulfuric acid ester salt group-containing copolymer composition is 10 mass% or less relative to 100 mass% of the sulfuric acid ester group and/or sulfuric

acid ester salt group-containing copolymer.

## INTERNATIONAL SEARCH REPORT

International application No.
PCT/JP2017/035509

**A. CLASSIFICATION OF SUBJECT MATTER**

Int.Cl. C08F290/06(2006.01)i, C02F5/00(2006.01)i, C02F5/10(2006.01)i, C08F216/20(2006.01)i, C08F220/04(2006.01)i, C11D3/37(2006.01)i, C11D7/22(2006.01)i

According to International Patent Classification (IPC) or to both national classification and IPC

**B. FIELDS SEARCHED**

Minimum documentation searched (classification system followed by classification symbols)

Int.Cl. C08F290/06, C02F5/00, C02F5/10, C08F216/20, C08F220/04, C11D3/37, C11D7/22

Documentation searched other than minimum documentation to the extent that such documents are included in the fields searched

| | |
|---|---|
| Published examined utility model applications of Japan | 1922-1996 |
| Published unexamined utility model applications of Japan | 1971-2017 |
| Registered utility model specifications of Japan | 1996-2017 |
| Published registered utility model specifications of Japan | 1994-2017 |

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | WO 2002/022692 A1 (KAO CORP.) 21 March 2002, claims, examples & US 2004/0048963 A1, claims, examples & EP 1318157 A1 & JP 2002-80506 A & JP 2002-97212 A | 1-6, 9, 10 |
| X | JP 2003-261605 A (KAO CORP.) 19 September 2003, claims, examples (Family: none) | 1-6, 9, 10 |

☒ Further documents are listed in the continuation of Box C.

☐ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 13 November 2017 (13.11.2017) | 19 December 2017 (19.12.2017) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No.
PCT/JP2017/035509

C (Continuation). DOCUMENTS CONSIDERED TO BE RELEVANT

| Category* | Citation of document, with indication, where appropriate, of the relevant passages | Relevant to claim No. |
|---|---|---|
| X | JP 2006-241303 A (KAO CORP.) 14 September 2006, claims, examples (Family: none) | 1-6, 9, 10 |
| X | WO 2015/093275 A1 (KAO CORP.) 25 June 2015, claims, examples & US 2016/0304735 A1, claims, examples & EP 3085745 A1 & JP 2015-113458 A | 1-6, 9, 10 |
| A | JP 2004-528439 A (GE BETZ INC.) 16 September 2004, & US 2003/0052303 A1 & US 2004/0039144 A1 & WO 2002/079106 A1 & EP 1379475 A1 | 1-10 |
| A | JP 60-118295 A (BETZ INTERNATIONAL, INC.) 25 June 1985, & US 4659480 A & US 4659481 A & US 4659482 A & EP 142929 A2 | 1-10 |
| A | JP 2010-111792 A (NIPPON SHOKUBAI CO., LTD.) 20 May 2010, (Family: none) | 1-10 |
| A | JP 2012-057095 A (NIPPON SHOKUBAI CO., LTD.) 22 March 2012, (Family: none) | 1-10 |
| A | JP 2012-057096 A (NIPPON SHOKUBAI CO., LTD.) 22 March 2012, (Family: none) | 1-10 |
| A | JP 2015-168770 A (NIPPON SHOKUBAI CO., LTD.) 28 September 2015, (Family: none) | 1-10 |
| A | WO 2015/045883 A1 (NIPPON SHOKUBAI CO., LTD.) 02 April 2015, & US 2016/0194423 A1 | 1-10 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004075977 A
- JP 2010111792 A
- JP 2004528439 T
- JP 62011534 A
- JP S3814718 B
- JP S39464 B
- JP S4315168 B
- JP S54122224 A
- JP S56133256 A
- JP S57192354 A


### Non-patent literature cited in the description


- **HIROSHI HORIGUCHI.** New Surfactants (Shin-Kaimen Kasseizai). Mitsui Shuppan Co., Ltd, 1975, 322-326
- **RYOHEI ODA ; KAZUHIRO SACHIMURA.** Synthesis of Surfactants I (Kaimen Ksseizai Gousei-hen I). Maki Shoten, 1965, 105-110